# EUROPÄISCHE PATENTSCHRIFT

(11) **EP 3 769 651 B1**
(45) Veröffentlichungstag und Bekanntmachung des Hinweises auf die Patenterteilung: **16.02.2022**
(21) Anmeldenummer: 19188122.6
(22) Anmeldetag: 24.07.2019
(51) Int. Cl.: A47J 43/07

(54) **HAUSHALTSKÜCHENMASCHINE**
DOMESTIC KITCHEN APPLIANCE
ROBOT MÉNAGER

(43) Veröffentlichungstag der Anmeldung: 27.01.2021
(73) Patentinhaber: Vorwerk & Co. Interholding GmbH, 42270 Wuppertal (DE)
(72) Erfinder: Ortmann, Dr., Roman, 47057 Duisburg (DE); Isenberg, Gerhard, 50668 Köln (DE); Thutewohl, Sarah, 44287 Dortmund (DE); Möller, Samuel, 48291 Telgte (DE)
(74) Vertreter: Gille Hrabal Partnerschaftsgesellschaft mbB Patentanwälte

(56) Entgegenhaltungen:
- EP-A1- 3 420 864
- DE-A1-102016 219 972

## Beschreibung

Die Erfindung betrifft ein Haushaltsgerät, insbesondere Haushaltsküchenmaschine, zum Zubereiten einer Speise insbesondere durch ein Zerkleinern, Mischen und/oder Erhitzen der Speise in einem Speisenzubereitungsgefäß. Das Haushaltsgerät umfasst das Speisenzubereitungsgefäß, in das eine Zutat für die Speisenzubereitung durch den Benutzer zugeführt werden kann.

Bei der Zubereitung von bestimmten Speisen wie z.B. Teig oder Mayonnaise mit einer Haushaltsküchenmaschine ist über einen definierten Zeitraum eine vorgegebene Menge einer Zutat wie z.B. Mehl oder Öl in gleichmäßiger Weise dem Speisenzubereitungsgefäß durch den Benutzer von Hand zuzuführen. Wenn der Benutzer die Zutat zu schnell zuführt, können beispielsweise bei einem Teig unerwünschte Klumpen entstehen oder bei der Zubereitung von Mayonnaise das gewünschte Emulgieren des Öls nicht planmäßig erfolgen. Wird hingegen die Zutat zu langsam zugeführt, wurde am Ende des definierten Zeitraums eine zu geringe Menge der Zutat zugeführt, so dass das Rezept nicht eingehalten wurde und somit die gewünschte Qualität des Kochergebnisses in der Regel nicht erreicht wird.

Ein Verfahren und eine Steuereinheit zur Überwachung eines Herstellungsprozesses einer Nahrungsmittel - Masse in einem Küchengerät ist aus der Druckschrift DE 10 2016 219 972 A1 bekannt.

Es ist Aufgabe der Erfindung, ein weiterentwickeltes Haushaltsgerät bereitzustellen.

Zur Lösung der Aufgabe dient ein Haushaltsgerät gemäß dem Hauptanspruch. Vorteilhafte Ausführungsformen ergeben sich aus den Unteransprüchen.

Zur Lösung der Aufgabe dient ein Haushaltsgerät, insbesondere Haushaltsküchenmaschine, zum Zubereiten einer Speise insbesondere durch ein Zerkleinern, Mischen und/oder Erhitzen der Speise in einem Speisenzubereitungsgefäß. Das Haushaltsgerät umfasst das Speisenzubereitungsgefäß, in das eine Zutat für die Speisenzubereitung durch den Benutzer zugeführt werden kann. Mindestens ein Sensor ist zum Ermitteln einer Zuführmenge einer Zutat während des Zuführens der Zutat in das Speisenzubereitungsgefäß vorgesehen. Eine Steuerungseinrichtung des Haushaltsgeräts ist so eingerichtet, dass anhand eines Sensorsignals des Sensors die Zuführmenge ermittelt wird.

Eine Speise, die ein gleichmäßiges Zuführen einer Zutat für einen vorgegebenen Zeitraum erfordert, kann auf diese Weise besonders zuverlässig und reproduzierbar durch einen Benutzer zubereitet werden.

Ein Haushaltsgerät ebenso wie eine Haushaltsküchenmaschine sind Geräte, die für den Einsatz in Privathaushalten eingerichtet und bestimmt sind. Es handelt sich dabei also nicht um industriell genutzte Geräte zur Zubereitung einer Speise.

Die Zuführmenge, die ermittelt wird, ist die aktuelle Zuführmenge, die allgemein kontinuierlich und/oder zeitaufgelöst durch den Sensor erfasst wird. Die Zuführmenge kann beispielsweise in Menge pro Zeiteinheit oder Masse pro Zeiteinheit durch die Steuerungseinrichtung ermittelt werden.

In einer Ausführungsform ist der Sensor so angeordnet, dass sich die Zutat beim Zuführen in das Speisenzubereitungsgefäß an dem Sensor vorbei bewegt. Ein besonders zuverlässiges und präzises Erfassen der Zuführmenge kann so ermöglicht werden. Alternativ oder ergänzend ist der Sensor an der im Betrieb oberen Seite des Speisenzubereitungsgefäßes angeordnet. Eine Zutat kann dadurch unter Ausnutzung der Schwerkraft dem Speisenzubereitungsgefäß zugeführt werden und dabei die Zuführmenge erfasst werden. Ein besonders einfacher Aufbau des Haushaltsgeräts und eine einfache Benutzung werden so ermöglicht. Der Sensor kann in einer Ausgestaltung an einem Deckel, einem Aufsatz auf dem Deckel oder einem Aufsatz auf dem Speisenzubereitungsgefäß oder an einem Gehäuse des Haushaltsgerätes angebracht oder integriert sein.

In einer Ausführungsform ist der Sensor ein influenzbasierter Sensor. Ein besonders präzises Erfassen der Zuführmenge bzw. des Zuführstroms kann so auch für kleine Mengen im µg-Bereich ermöglicht werden. Zudem kann ein influenzbasierter Sensor mit besonders geringem Aufwand hergestellt und implementiert werden. In einer alternativen Ausgestaltung basiert der Sensor auf mindestens einer Lichtschranke oder einer optischen Messanordnung, insbesondere zur Messung der radialen Ausdehnung des Zutatenstroms.

Ein influenzbasierter Sensor ist so aufgebaut, dass ein Passieren eines geladenen Partikels grundsätzlich zu einem Stromfluss führt, so dass der influenzbasierte Sensor ein Sensorsignal ausgeben kann, welches beispielsweise mit der Menge der passierenden, geladenen Partikel korreliert. Ein geladenes Partikel ist dabei insbesondere ein Partikel einer Zutat wie beispielsweise ein Pulverkorn von Mehl.

In einer Ausführungsform umfasst der influenzbasierte Sensor eine Elektrode und/oder eine elektrostatische Abschirmung für die Elektrode. Die Elektrode besteht aus einem elektrisch leitfähigen Material, insbesondere Metall. Die Abschirmung, die als ein eigenständiges Bauteil oder eine Beschichtung ausgeführt sein kann, besteht aus einem elektrisch isolierenden Material wie z.B. Metall. Das Material der Abschirmung ist also nicht elektrisch leitfähig. Insbesondere ist die Abschirmung benachbart zur Elektrode angeordnet, vorzugsweise derart, dass eine Zutat sich beim Zuführen in das Speisenzubereitungsgefäß an einer Seite der Elektrode - nachfolgend auch Innenseite genannt - an der Elektrode vorbei bewegt und an der gegenüberliegenden Seite der Elektrode die Abschirmung angrenzt. Insbesondere ist die Abschirmung genau zwischen der Elektrode und dem Bauteil angeordnet, an dem die Elektrode gemeinsam mit der Abschirmung angebracht oder integriert ist. In einer bevorzugten Ausgestaltung weist die Elektrode an der Seite, an der sich eine Zutat beim Zuführen vorbei bewegt, eine Isolationsschicht auf, um Störeinflüsse zu reduzieren.

Partikel weisen in der Regel eine Ladung auf. Wenn ein solcher Partikel, der auch als Punktladung bezeichnet werden kann, den influenzbasierten Sensor passiert, bildet die Punktladung ein elektrostatisches Feld aus. Sobald sich die Punktladung dem Sensor nähert, wirkt das elektrostatische Feld auf die oben erwähnte Seite bzw. Innenseite der Elektrode, an dem sich die Partikel beim Zuführen einer Zutat vorbei bewegen können. Dies hat zur Folge, dass sich die entgegengesetzt geladenen freien Ladungsträger im Material der Elektrode des Sensors zu dieser Seite der Elektrode, also der Innenseite, bewegen und die gleiche Anzahl an Ladungen aus dem Sensor herausgeleitet wird, was einen Stromfluss erzeugt. Es wird also eine Ladung influenziert, die zu einem Stromfluss führt, der wiederum als Sensorsignal ausgegeben oder in ein Sensorsignal, z.B. mit der Einheit Spannung, umgewandelt und/oder verstärkt werden kann.

In einer Ausführungsform weist der Sensor eine geschlossene Kontur oder Ringform auf, so dass sich die Zutat beim Zuführen in das Speisenzubereitungsgefäß an einer Innenseite des geschlossenen oder ringförmigen Sensors vorbei bewegt. Es kann so vermieden werden, dass sich Teile der Zutat beim Zuführen der Erfassung durch den Sensor entziehen. Insbesondere hat der Sensor die Form eines Zylinders oder eines Kegelstumpfes.

Wenn der Sensor der influenzbasierte Sensor ist, kann eine Korrelation des radialen Abstands einer Punktladung von einer Mittelachse durch den ringförmigen oder geschlossenen Sensor mit der Höhe der durch die Punktladung in den Sensor induzierten Ladung erhalten werden. Die influenzierte Ladung nimmt zu, je mehr sich die Punktladung der Sensormitte bzw. der Mittelachse nähert. Diese Korrelation kann beispielsweise mit einer glockenförmigen Kurve, insbesondere mit dem Verlauf wie bei einer Gaußkurve, beschrieben werden, bei der die influenzierte Ladung auf der Y-Achse und der Abstand der Punktladung von der Mittelachse auf der X-Achse aufgetragen ist. Das Stromsignal, das in einer Ausgestaltung als das Sensorsignal ausgegeben wird, beschreibt dann die Ableitung oder Änderung der influenzierten Ladung über den Abstand zur Mittelachse. An Wendestellen der Kurve der influenzierten Ladung entstehen Peaks im Sensorsignal bzw. Stromsignal.

Passieren nun mehrere Partikel zeitgleich den Sensor, so gilt das Superpositionsprinzip, d.h., die Feldlinien der Partikel überlagern sich und die Ladungen werden aufaddiert, sodass sich ein Summenstromfluss ergibt. Da das Stromsignal in der Regel relativ klein ist, kann bevorzugt ein Stromverstärker zur Verstärkung des Stromsignals eingesetzt werden. Zur besseren Verarbeitungsfähigkeit des Sensorsignals kann bevorzugt ein Wandler zur Umwandlung des Stromsignals in ein Spannungssignal eingesetzt werden.

In einer Ausführungsform hat der Sensor eine Sensorlänge in Zuführrichtung der Zutat in das Speisenzubereitungsgefäß, die dem einfachen bis doppelten, bevorzugt ungefähr dem 1,3-fachen, eines Sensordurchmessers entspricht. Ist in einer Ausgestaltung der Sensor oder die Elektrode nicht zylinderförmig, sondern z.B. kegelstumpfförmig geformt, entspricht der Sensordurchmesser dem mittleren Durchmesser über die Sensorlänge. Versuche haben gezeigt, dass ein influenzbasierter Sensor besonders zuverlässig und präzise zum Erfassen der Zuführmenge funktioniert, wenn die Sensorlänge nicht größer als doppelt so groß wie der Sensordurchmesser und/oder nicht kleiner als der Sensordurchmesser ist. Die besten Ergebnisse wurden mit einem Sensor erzielt, dessen Sensorlänge etwa dem 1,3-fachen des Sensordurchmessers entspricht.

In einer Ausführungsform ist der Sensor an einem Deckel für das Speisenzubereitungsgefäß oder an einem insbesondere trichterförmigen Aufsatz für den Deckel oder das Speisenzubereitungsgefäß angebracht oder darin integriert. Es kann so besonders einfach ermöglicht werden, dass die Partikel den Sensor lediglich passieren. Vorzugsweise hat der Deckel eine mittige und insbesondere kreisrunde Öffnung zum Zuführen von Zutaten. Insbesondere kann der Aufsatz durch den Benutzer so auf den Deckel manuell lösbar aufgesetzt oder aufgesteckt werden, dass der Aufsatz und die Öffnung des Deckels einen gemeinsamen Zuführkanal für Zutaten bildet. Bei einem influenzbasierten Sensor kann dieser bei ringförmiger Ausführung in einer Ausgestaltung einen Teil des Aufsatzes bilden, um eine kompakte Bauweise zu ermöglichen. Wenn der Sensor am Deckel angebracht ist, kann der Sensor oberhalb oder unterhalb des Deckels, bevorzugt zentriert zur Öffnung, oder an der Innenseite der Öffnung des Deckels angebracht sein.

In einer Ausgestaltung verfügt der Sensor über eine drahtlose Kommunikationsschnittstelle, bevorzugt in Verbindung mit einer Batterie, zum drahtlosen Übermitteln eines Signals oder des Sensorsignals zur Steuerungseinrichtung. Insbesondere ist eine Auswertungselektronik vorzugsweise in direkter Nachbarschaft zum Sensor untergebracht oder eine Auswertung wird durch einen Programmcode in der Steuerungseinrichtung umgesetzt. In einer Ausgestaltung ist der Sensor z.B. im Topf oder Deckel verbaut und die integrierte Auswertungselektronik wird über ein Kontaktelement mit elektrischer Energie versorgt und/oder funkt entweder seine Auswertungsdaten drahtlos an die Steuerungseinrichtung im Gehäuse des Haushaltsgerätes oder überträgt die Auswertungsdaten drahtgebunden über ein Kontaktmodul. In einer Ausgestaltung sind im Topf oder Deckel nur die Sensorleitungen vorhanden und werden vorzugsweise elektrisch abgeschirmt an die Steuerungseinrichtung geleitet. Die Auswertung erfolgt dann in der Steuerungseinrichtung.

In einer Ausführungsform ist die Steuerungseinrichtung so eingerichtet, dass die Zuführmenge mithilfe einer Kalibrierungskurve anhand des Sensorsignals ermittelt wird. Ein besonders zuverlässiges und präzises Ermitteln der Zuführmenge kann so realisiert werden. Insbesondere gibt eine Kalibrierungskurve die Korrelation des Sensorsignals mit der Zuführmenge insbesondere für eine bestimmte Zutat an.

In einer Ausgestaltung sind mehrere Kalibrierungskurven jeweils für eine bestimmte Zutat in der Steuerungseinrichtung hinterlegt, vorzugsweise aus zuvor durchgeführten Testreihen beim Hersteller. Die Kalibrierungskurven stehen so jederzeit für die Ermittlung der Zuführmenge bereit. Durch Nutzung eines digitalen Rezeptes über eine Benutzerschnittstelle oder über eine Benutzereingabe der Zutat, die zugeführt werden soll, erhält die Steuerungseinheit Kenntnis über die Zutat, die zugeführt wird. Eine Zuordnung der jeweiligen Kalibrierungskurve ist so problemlos möglich.

In einer Ausgestaltung wird eine Kalibrierungskurve durch das Haushaltsgerät erstellt. Eine Kalibrierungskurve kann auf diese Weise zu einer bestimmten Zutat neu generiert werden, die beispielsweise zuvor noch nicht in der Steuerungseinrichtung hinterlegt war. Aufgrund der verschiedenen elektrostatischen Ladung unterschiedlicher Zutaten können so für jede Zutat jeweils charakteristische Kalibrierungskurven erzeugt werden, welche sich insbesondere in der Steigung der insbesondere im Wesentlichen linearen Kalibrierungskurve unterscheiden können, wobei die Zuführmenge auf der X-Achse und der Betrag des vorzugsweise über die Zeit integrierten Sensorsignals auf der Y-Achse aufgetragen sind. Insbesondere kann die Zutat aus einem Gemisch mehrerer Substanzen bestehen. Auch hierfür kann eine eigene Kalibrierungskurve erstellt werden, z.B. für eine Backmischung mit zumindest den Bestandteilen Mehl und Zucker. Insbesondere umfasst die Generierung einer Kalibrierungskurve eine Aufnahme der Sensorsignale für verschiedene Mengen der entsprechenden Zutat, während sich die Zutat an dem Sensor vorbei bewegt. Diese Mengen können vorher vom Benutzer abgewogen werden. Auf diese Weise entsteht die Kalibrierungskurve, welche eine interpolierte und/oder extrapolierte Kurve über mindestens drei, bevorzugt mindestens fünf Messpunkte sein kann. Insbesondere wird jeder Messpunkt durch das integrierte Sensorsignal auf der Y-Achse und die entsprechende Menge der Zutat auf der X-Achse gebildet. Z.B. über eine Cloud können Messdaten zu Umgebungseinflüssen wie z.B. Temperatur-, Luftfeuchtigkeits- und Luftdruckschwankungen berücksichtigt werden.

In einer Ausführungsform ist ein Gewichtssensor vorgesehen. Insbesondere kann der Gewichtssensor zur Erzeugung der Kalibrierungskurve oder zur Überwachung der ermittelten Zuführmenge genutzt werden. Ein besonders zuverlässiges Ermitteln der Zuführmenge kann so ermöglicht werden. In einer Ausgestaltung wird zur Generierung einer neuen Kalibrierungskurve für eine Zutat das Sensorsignal während des Zuführens der Zutat aufgezeichnet und gleichzeitig das Signal des Gewichtssensors aufgezeichnet, um durch Auftragen des insbesondere integrierten Sensorsignals des Sensors über dem gemessenen Gewicht des Gewichtssensors die Kalibrierungskurve für diese Zutat zu erhalten. Der Benutzer muss dadurch die Zutat nicht vorher zur Generierung der Kalibrierungskurve abwiegen. In einer Ausgestaltung wird insbesondere in definierten Zeitabständen während des Zuführens einer Zutat die Differenz des Gewichtes an den Zeitabständen durch die Steuerungseinheit ermittelt und mit der integrierten Zuführmenge verglichen, die mithilfe des Sensors ermittelt wurde. Vorzugsweise wird ein Toleranzband eingesetzt, um bei einer entsprechend großen Differenz beider Mengenwerte, die bei dem Vergleich berechnet wurden, das Ergebnis auszugeben, dass die Messung durch den Sensor ungenau oder gestört sein könnte. Darauf hin können dann entsprechende Maßnahmen eingeleitet werden, um einen negativen Einfluss auf das Kochergebnis zu reduzieren. Insbesondere kann der Sensor der Gewichtssensor sein. Ein Gewichtssensor ist häufig bereits in dem Haushaltsgerät zur Speisenzubereitung integriert.

Insbesondere ist ein Gewichtssensor in den vorzugsweise drei Standfüßen des Haushaltsgerätes angeordnet. Dem Gewichtssensor kann auf diese Weise eine Doppelfunktion zukommen. Eine Zuführmenge, die durch den Gewichtssensors ermittelt wird, unterliegt in der Regel der Störung durch die Trägheitskraft, die Kraft des Aufpralls der Zutat gegen den Boden des Speisenzubereitungsgefäßes sowie etwaige Unwuchtkräfte aus der Speisenzubereitung z.B. beim Rühren oder Kneten. Diese Störeinflüsse werden durch einen Gewichtssensor ebenfalls erfasst, so dass das so ermittelte Gewicht bzw. die Zuführmenge durch die Störungen fälschlich vergrößert oder verkleinert werden. Diese Störgrößen können abnehmen, je gleichmäßiger die Zutat zugeführt wird. Ein weiterer Nachteil eines Gewichtssensors besteht darin, dass der Gewichtssensor in dem Haushaltsgerät zur Speisenzubereitung in der Regel relativ ungenau misst. Ein Gewichtssensor mit hoher Präzision und Zeitauflösung wäre hingegen technisch sehr aufwändig, insbesondere im Vergleich zu einem influenzbasierten Sensor.

Das Haushaltsgerät ist so eingerichtet, dass dem Benutzer ein Hinweis ausgegeben wird, der den Benutzer darauf hinweist, ob die Zutat gerade zu schnell oder zu langsam dem Speisenzubereitungsgefäß zugeführt wird. Der Benutzer kann dadurch die Zuführmenge bzw. die Zuführgeschwindigkeit anpassen. Die Reproduzierbarkeit und die Qualität des Kochergebnisses können so gesteigert werden. Insbesondere ist der Hinweis ein akustischer und/oder optischer Hinweis. Insbesondere weist das Haushaltsgerät ein Display zum Ausgeben des optischen Hinweises auf. In einer Ausgestaltung umfasst der Hinweis eine Soll-Kurve für die planmäßige Zuführmenge über einen definierten Zeitraum und/oder eine entsprechende Ist-Kurve. Insbesondere wird die Ist-Kurve der Soll-Kurve gegenübergestellt und/oder gemeinsam mit der Soll-Kurve an den Benutzer ausgegeben. Durch ein digitales Rezept oder mittels einer Eingabe durch den Benutzer über eine Benutzerschnittstelle kann die Steuerungseinrichtung die Information erhalten, über welchen Zeitraum welche Gesamtmenge einer Zutat gleichmäßig in das Speisenzubereitungsgefäß zugeführt werden soll. Insbesondere in Verbindung mit der Information über die zuzuführende Zutat, durch welche die entsprechende Kalibrierungskurve ausgewählt werden kann, ermittelt die Steuerungseinrichtung die Soll-Kurve.

Zur Ermittlung, ob der Benutzer die Zutat gerade zu schnell oder zu langsam dem Speisenzubereitungsgefäß zuführt, kann die Ist-Kurve mit der Soll-Kurve durch die Steuerungseinrichtung verglichen werden. Liegt die Ist-Kurve unterhalb der Soll-Kurve, so wird die Zutat zu langsam zugeführt. Liegt die Ist-Kurve overhalb der Soll-Kurve, so wird die Zutat zu schnell zugeführt. Entsprechend kann hieraus der oben erwähnte Hinweis generiert werden, insbesondere bei Überschreiten zuvor festgelegter Mindestabstände von der Soll-Kurve und der Ist-Kurve. In einer Ausgestaltung bilden die Soll-Kurve und die Ist-Kurve die zeitlich inkrementelle Zuführmenge, also die zeitaufgelöste Zuführmenge, ab. Alternativ oder ergänzend bilden die Soll-Kurve und die Ist-Kurve die ab dem Beginn des Zuführens integrierte Zuführmenge der Zutat ab. Insbesondere wird über den Hinweis der Benutzer darüber informiert, wieviel der Zutat zugeführt wird, und ob die Zuführmenge z.B. pro Sekunde zu hoch oder zu niedrig ist.

Das Haushaltgerät umfasst vorzugsweise ein äußeres Gehäuse, das vollständig oder teilweise aus Kunststoff bestehen kann. Innerhalb des Gehäuses kann es ein oder mehrere Strukturen geben, die aus Kunststoff und/oder Metall bestehen können. Die ein oder mehrere Strukturen können als Halterung dienen. Die Strukturen können einen Motor halten. Das Haushaltsgerät umfasst vorzugsweise ein Display, auf dem zum Beispiel Betriebszustände angezeigt werden können. Ein angezeigter Betriebszustand kann sich auf eine Drehgeschwindigkeit eines Werkzeugs des Haushaltsgeräts beziehen. Das Display kann berührungsempfindlich ausgestaltet sein. Durch Berühren können dann Einstellungen über das Display vorgenommen werden. Das Haushaltsgerät kann ein Werkzeug für ein Mischen oder Zerkleinern umfassen, das aus Metall besteht. Das Werkzeug kann eine Welle umfassen, von der wenigstens ein Messer absteht. Vorzugsweise stehen wenigstens zwei Messer von der Welle ab. Das Haushaltsgerät kann eine Signaleinrichtung umfassen, die sich auf eine Temperatur bezieht. Durch die Signaleinrichtung kann beispielsweise signalisiert werden, wenn eine gewünschte Solltemperatur erreicht worden ist, die beispielsweise durch einen Benutzer eingestellt worden ist. Durch die Signaleinrichtung kann beispielsweise signalisiert werden, wenn eine gewünschte Solltemperatur noch nicht erreicht worden ist, die beispielsweise durch einen Benutzer eingestellt worden ist. Eine von dem Haushaltsgerät gemessene Ist-Temperatur weicht dann von der Soll-Temperatur ab. Die Signaleinrichtung kann Leuchtelemente umfassen, die durch unterschiedliche Farben Temperaturen und/oder Solltemperaturen signalisieren. Die Signaleinrichtung kann ein Display umfassen, auf der eine Temperatur angezeigt wird. Das Haushaltsgerät kann ein elektrisches Kabel nebst einem Stecker umfassen, wobei der Stecker in eine Steckdose eingesteckt werden kann. Über das elektrische Kabel kann dann das Haushaltsgerät mit elektrischer Energie versorgt werden. Das Haushaltsgerät kann eine Batterie umfassen, über welche das Haushaltsgerät mit Energie versorgt werden kann. Das Haushaltsgerät kann einen Boden umfassen, der ganz oder vollständig aus Kunststoff besteht. Das Speisenzubereitungsgefäß kann teilweise oder überwiegend aus Metall und/oder Kunststoff bestehen. Das Speisenzubereitungsgefäß kann einen Boden umfassen, der durch zumindest zwei Teile gebildet wird. Die beiden Teile können miteinander lösbar verbunden sein. Die beiden Teile können durch Formschluss miteinander lösbar verbunden sein.

Nachfolgend werden Ausführungsbeispiele der Erfindung auch anhand von Figuren näher erläutert.

Es zeigen:
- Figur 1:: Darstellung eines Aufsatzes mit dem Sensor zur Erfassung der Zuführmenge;
- Figur 2:: Querschnittsdarstellung eines Haushaltsgerätes mit dem Sensor zur Erfassung der Zuführmenge am Deckel des Speisenzubereitungsgefäßes;
- Figur 3:: Darstellung einer Soll-Kurve und Ist-Kurve bezüglich der Zuführmenge über die Zeit;
- Figur 4:: Darstellung einer exemplarischen Kalibrierungskurve für Kaffeepulver.

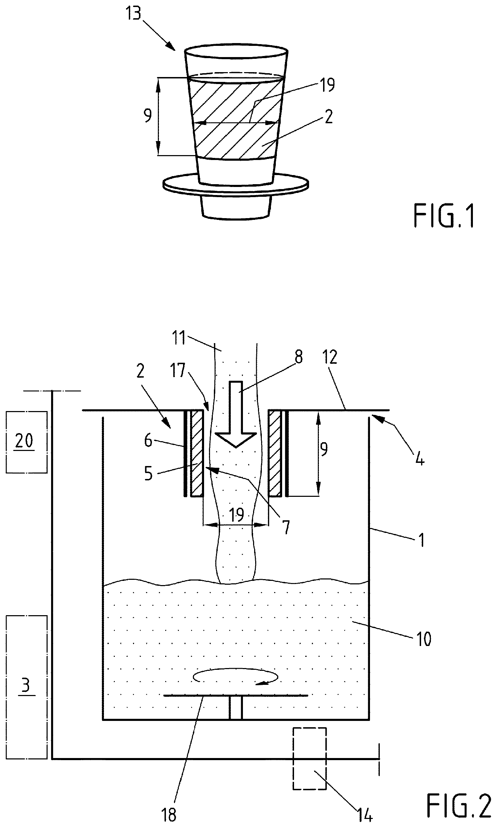

Die Figur 1 zeigt einen Aufsatz 13 mit einem optischen oder bevorzugt einem influenzbasierten Sensor 2. Der Aufsatz 13 kann auf einen Deckel 12 mit einer Öffnung 17 aufgesetzt und/oder in die Öffnung 17 gesteckt werden. Ein Beispiel für einen solchen Deckel 12 und ein solches Speisenzubereitungsgefäß 1 eines Haushaltsgeräts zur Zubereitung einer Speise 10 sind in Figur 2 gezeigt, wobei bei Vorsehen des Aufsatzes 13 mit einem influenzbasierten Sensor 2 der Deckel 12 abweichend von Figur 2 keinen zweiten influenzbasierten Sensor 2 aufweist. Der Aufsatz 13 hat eine Trichterform. Ein mittlerer Abschnitt des Aufsatzes 13 wird durch den influenzbasierten Sensor 2 gebildet oder ausgekleidet, der daher die Form eines Stumpfkegels hat. Die Sensorlänge 9 ist größer als der Sensordurchmesser 19. Mit Ausnahme des influenzbasierten Sensors 2 ist der Aufsatz 13 aus einem insbesondere transparenten Kunststoff hergestellt.

Die Figur 2 zeigt das Haushaltsgerät, insbesondere Haushaltsküchenmaschine, zum Zubereiten einer Speise 10 insbesondere durch ein Zerkleinern oder Mischen mittels eines drehbaren Werkzeugs 18 und/oder Erhitzen mittels eines nicht dargestellten Heizelements. Wenn der Benutzer eine Zutat 11 in die Zuführrichtung 8 durch die Öffnung 17 des Deckels 12 in das Speisenzubereitungsgefäß 1 zuführt, passiert die Zutat 11 automatisch die geschlossen geformte, ringförmige, zylindrische Elektrode 5 an ihrer Innenseite 7. Zur elektrostatischen und elektrischen Abschirmung gegenüber dem Speisenzubereitungsgefäß 1 und/oder dem Deckel 12 ist am Außenumfang der Elektrode 5 eine Abschirmung 6 angeordnet. Die Sensorlänge 9 entspricht bevorzugt ungefähr dem 1,3-fachen des Sensordurchmessers 19. Mit einem Gewichtssensor 14 kann das Gewicht des Haushaltsgeräts erfasst werden. Nicht dargestellt ist ein Anschluss der Elektrode, über den ein Stromsignal oder Sensorsignal an die Steuerungseinrichtung 3 übertragen wird. Insbesondere ist eine Verstärker- und/oder Wandler-Einheit 20 zur Verstärkung des Stromsignals und/oder zum Umwandeln in ein Spannungssignal zwischengeschaltet. Wenn der Benutzer eine Zutat an der oberen Seite 4 des Speisenzubereitungsgefäßes 1 zuführt, wird die Zuführmenge durch den Sensor 2 erfasst.

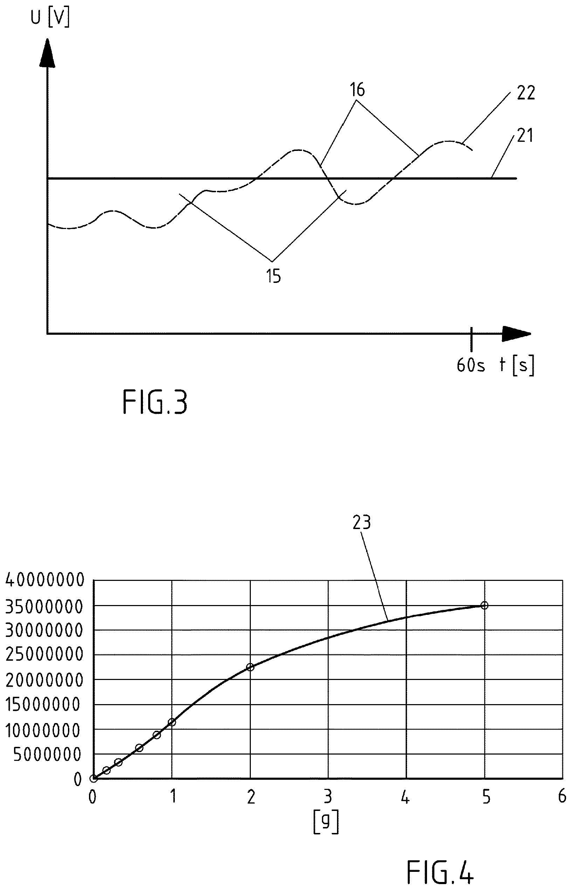

Die Figur 3 zeigt eine Soll-Kurve 21 und eine Ist-Kurve 22 der Zuführmenge, die z.B. als elektrische Spannung in der Einheit Volt über die Zeit t in Sekunden aufgetragen sind. Aus dem Vergleich der beiden Kurven 21, 22 kann ermittelt werden, ob ein Hinweis "zu langsam" 15 oder ein Hinweis "zu schnell" 16 an den Benutzer auszugeben ist. Grundsätzlich kann auch ein Diagramm, wie dieses in der Figur 3 gezeigt wird, als Hinweis ausgegeben werden.

Die Figur 4 zeigt exemplarisch eine Kalibrierungskurve 23 für Kaffeepulver. Zuvor abgewogene oder durch den Gewichtssensor 14 gewogene unterschiedliche Kaffeepulvermengen sind auf der X-Achse aufgetragen. Auf der Y-Achse ist der Betrag des Integrals insbesondere zum Quadrat des Sensorsignals aufgetragen. Aus den Messpunkten wurde die eingezeichnete Kalibrierungskurve 23 interpoliert und extrapoliert, die im Wesentlichen linear mit ungefähr konstanter Steigung verläuft.

Wählt nun ein Benutzer über eine nicht dargestellte Benutzerschnittstelle ein digitales Rezept aus und wird dazu aufgefordert, Kaffeepulver gleichmäßig z.B. über einen Zeitraum von 60 Sekunden dem Speisenzubereitungsgefäß wie in Figur 3 angedeutet zuzuführen, dann wird anhand der Kalibrierungskurve 23 der Figur 3 und den Sensorsignalen die aktuelle Ist-Zuführmenge kontinuierlich ermittelt und mit einer Soll-Zuführmenge verglichen. Weicht die aktuelle Zuführmenge von der Soll-Zuführmenge um eine zuvor festgelegte Differenz ab, wird der Benutzer hierüber automatisch informiert und ein Hinweis zur Korrektur gegeben.

## Patentansprüche

1. Haushaltsgerät, insbesondere Haushaltsküchenmaschine, zum Zubereiten einer Speise (10) insbesondere durch ein Zerkleinern, Mischen und/oder Erhitzen der Speise (10) in einem Speisenzubereitungsgefäß (1), wobei das Haushaltsgerät das Speisenzubereitungsgefäß (1) umfasst, in das eine Zutat (11) für die Speisenzubereitung durch den Benutzer zugeführt werden kann, wobei mindestens ein Sensor (2) zum Ermitteln einer Zuführmenge einer Zutat (11) während des Zuführens der Zutat (11) in das Speisenzubereitungsgefäß (1) vorgesehen ist und eine Steuerungseinrichtung (3) des Haushaltsgeräts so eingerichtet ist, dass anhand eines Sensorsignals des Sensors (2) die Zuführmenge ermittelt wird, **dadurch gekennzeichnet, dass** das Haushaltsgerät so eingerichtet ist, dass dem Benutzer ein Hinweis (15, 16) ausgegeben wird, der den Benutzer darauf hinweist, ob die Zutat (11) gerade zu schnell oder zu langsam dem Speisenzubereitungsgefäß (1) zugeführt wird.

2. Haushaltsgerät nach Anspruch 1, **dadurch gekennzeichnet, dass** der Sensor (2) so angeordnet ist, dass sich die Zutat (11) beim Zuführen in das Speisenzubereitungsgefäß (1) an dem Sensor (2) vorbei bewegt und/oder der Sensor (2) an der im Betrieb oberen Seite (4) des Speisenzubereitungsgefäßes (1) angeordnet ist.

3. Haushaltsgerät nach Anspruch 1 oder 2, **dadurch gekennzeichnet, dass** der Sensor ein influenzbasierter Sensor (2) ist.

4. Haushaltsgerät nach dem vorhergehenden Anspruch, **dadurch gekennzeichnet, dass** der influenzbasierte Sensor (2) eine Elektrode (5) und/oder eine elektrostatische Abschirmung (6) für die Elektrode (5) umfasst.

5. Haushaltsgerät nach einem der vorhergehenden Ansprüche, **dadurch gekennzeichnet, dass** der Sensor (2) eine geschlossene Kontur oder Ringform aufweist, so dass sich die Zutat (11) beim Zuführen in das Speisenzubereitungsgefäß (1) an einer Innenseite (7) des geschlossenen oder ringförmigen Sensors (2) vorbei bewegt.

6. Haushaltsgerät nach dem vorhergehenden Anspruch, **dadurch gekennzeichnet, dass** der Sensor (2) eine Sensorlänge (9) in Zuführrichtung (8) der Zutat (11) in das Speisenzubereitungsgefäß (1) hat, die dem einfachen bis doppelten, bevorzugt ungefähr dem 1,3-fachen, eines Sensordurchmessers (19) entspricht.

7. Haushaltsgerät nach einem der vorhergehenden Ansprüche, **dadurch gekennzeichnet, dass** der Sensor (2) an einem Deckel (12) für das Speisenzubereitungsgefäß (1) oder an einem insbesondere trichterförmigen Aufsatz (13) für den Deckel (12) oder das Speisenzubereitungsgefäß (1) angebracht oder darin integriert ist.

8. Haushaltsgerät nach einem der vorhergehenden Ansprüche, **dadurch gekennzeichnet, dass** die Steuerungseinrichtung (3) so eingerichtet ist, dass die Zuführmenge mithilfe einer Kalibrierungskurve (23) anhand des Sensorsignals ermittelt wird.

9. Haushaltsgerät nach einem der vorhergehenden Ansprüche, **gekennzeichnet durch** einen Gewichtssensor (14), der insbesondere zur Erzeugung der Kalibrierungskurve (23) oder zur Überwachung der ermittelten Zuführmenge genutzt werden kann.

## Claims

1. Household appliance, in particular domestic food processor, for preparing a food (10), in particular by chopping, mixing and/or heating the food (10) in a food preparation vessel (1), wherein the household appliance comprises the food preparation vessel (1) into which an ingredient (11) for food preparation can be fed by the user, wherein at least one sensor (2) is provided for determining a feeding amount of an ingredient (11) during the feeding of the ingredient (11) into the food preparation vessel (1), and a control device (3) of the household appliance is configured such that the feeding amount is determined on the basis of a sensor signal of the sensor (2), **characterized in that** the household appliance is configured such that an indication (15, 16) is output to the user, which indicates to the user whether the ingredient (11) is currently being fed to the food preparation vessel (1) too quickly or too slowly.

2. Household appliance according to claim 1, **characterized in that** the sensor (2) is arranged such that the ingredient (11) passes the sensor (2) when it is fed into the food preparation vessel (1) and/or the sensor (2) is arranged on the side of the food preparation vessel (1) which is the upper side (4) during operation.

3. Household appliance according to claim 1 or 2, **characterized in that** the sensor is a sensor (2) based on electrostatic induction.

4. Household appliance according to the preceding claim, **characterized in that** the sensor (2) based on electrostatic induction comprises an electrode (5) and/or an electrostatic shield (6) for the electrode (5).

5. Household appliance according to one of the preceding claims, **characterized in that** the sensor (2) has a closed contour or annular shape so that the ingredient (11) passes an inner side (7) of the closed or annular sensor (2) when it is fed into the food preparation vessel (1).

6. Household appliance according to the preceding claim, **characterized in that** the sensor (2) has a sensor length (9) in the feed direction (8) of the ingredient (11) into the food preparation vessel (1), which corresponds to one to two times, preferably approximately 1.3 times, a sensor diameter (19).

7. Household appliance according to one of the preceding claims, **characterized in that** the sensor (2) is attached to or integrated in a lid (12) for the food preparation vessel (1) or in an in particular funnel-shaped attachment (13) for the lid (12) or the food preparation vessel (1).

8. Household appliance according to one of the preceding claims, **characterized in that** the control device (3) is configured such that the feeding amount is determined on the basis of the sensor signal by means of a calibration curve (23).

9. Household appliance according to one of the preceding claims, **characterized by** a weight sensor (14) which can in particular be used for generating the calibration curve (23) or for monitoring the determined feeding amount.

## Revendications

1. Robot ménager, en particulier robot de cuisine, pour la préparation d'un aliment (10), en particulier par un broyage, un mélange et/ou un chauffage de l'aliment (10) dans un récipient de préparation d'aliments (1), le robot ménager comprenant le récipient de préparation d'aliments (1) dans lequel un ingrédient (11) peut être amené pour la préparation d'aliments par l'utilisateur, au moins un capteur (2) étant prévu pour déterminer une quantité d'alimentation d'un ingrédient (11) pendant l'amenée de l'ingrédient (11) dans le récipient de préparation d'aliments (1) et un dispositif de commande (3) du robot ménager étant conçu de telle sorte que la quantité d'alimentation est déterminée à l'aide d'un signal de capteur du capteur (2), **caractérisé en ce que** du robot ménager est agencé de telle sorte qu'une indication (15, 16) est délivrée à l'utilisateur, laquelle indique à l'utilisateur si l'ingrédient (11) est justement amené trop rapidement ou trop lentement dans le récipient de préparation d'aliments (1).

2. Robot ménager selon la revendication 1, **caractérisé en ce que** le capteur (2) est disposé de telle sorte que l'ingrédient (11) se déplace devant le capteur (2) lorsqu'il est introduit dans le récipient de préparation d'aliments (1) et/ou le capteur (2) est disposé sur le côté supérieur (4) du récipient de préparation d'aliments (1) pendant le fonctionnement.

3. Robot ménager selon la revendication 1 ou 2, **caractérisé en ce que** le capteur est un capteur (2) basé sur l'influence.

4. Robot ménager selon la revendication précédente, **caractérisé en ce que** le capteur à base d'influence (2) comprend une électrode (5) et/ou un blindage électrostatique (6) pour l'électrode (5).

5. Robot ménager selon l'une quelconque des revendications précédentes, **caractérisé en ce que** le capteur (2) présente un contour fermé ou une forme annulaire, de sorte que l'ingrédient (11) se déplace devant une face intérieure (7) du capteur fermé ou annulaire (2) lorsqu'il est introduit dans le récipient de préparation culinaire (1).

6. Robot ménager selon la revendication précédente, **caractérisé en ce que** le capteur (2) a une longueur de capteur (9) dans la direction d'alimentation (8) de l'ingrédient (11) dans le récipient de préparation d'aliments (1) qui correspond à une fois à deux fois, de préférence à environ 1,3 fois, un diamètre de capteur (19).

7. Robot ménager selon l'une quelconque des revendications précédentes, **caractérisé en ce que** le capteur (2) est monté sur ou intégré à un couvercle (12) pour le récipient de préparation des aliments (1) ou à une garniture (13), notamment en forme d'entonnoir, pour le couvercle (12) ou le récipient de préparation des aliments (1).

8. Robot ménager selon l'une des revendications précédentes, **caractérisé en ce que** le dispositif de commande (3) est agencé de telle sorte que la quantité d'alimentation est déterminée à l'aide d'une courbe d'étalonnage (23) à partir du signal du capteur.

9. Robot ménager selon l'une des revendications précédentes, **caractérisé par** un capteur de poids (14) qui peut être utilisé notamment pour générer la courbe de calibrage (23) ou pour surveiller la quantité d'alimentation déterminée.
